# FASCICULE DE BREVET EUROPEEN

(11) **EP 1 232 190 B1**
(45) Date de publication et mention de la délivrance du brevet: **20.07.2011**
(21) Numéro de dépôt: 00960807.6
(22) Date de dépôt: 06.09.2000
(51) Int. Cl.: C08F 2/32

(54) **EMULSION DE POLYMERES EAU-DANS-HUILE ET SON PROCEDE DE FABRICATION**
VERFAHREN ZUR HERSTELLUNG EINER STABILEN KONZENTRIERTEN WASSER-IN-ÖL-EMULSION UND VERFAHREN ZU DEREN HERSTELLUNG
WATER-IN-OIL POLYMER EMULSION AND METHOD FOR MAKING SAME

(30) Priorité: 15.10.1999 FR 9912896
(43) Date de publication de la demande: 21.08.2002
(73) Titulaire: ARKEMA FRANCE, 92700 Colombes (FR)
(72) Inventeur: CERF, Martine, F-27300 Bernay (FR); TRIBALLIER, Karine, F-27300 Bernay (FR); BERNARD, Françoise, F-27300 Corneville la Fouquetière (FR)
(74) Mandataire: Dang, Doris
(86) Numéro de dépôt international: PCT/FR2000/002454
(87) Numéro de publication internationale: WO 2001/029092

(56) Documents cités:
- EP-A- 0 374 646
- EP-A- 0 719 794
- WO-A-95/32227
- GB-A- 1 399 112
- US-A- 4 469 840

## Description

La présente invention concerne une émulsion de polymères eau-dans-huile contenant dans une phase organique, continue et pratiquement non miscible à l'eau, des polymères solubles dans l'eau ou gonflables à l'eau, finement divisés, un agent émulsifiant eau-dans-huile et éventuellement des agents mouillants. Elle a également pour objet un procédé de préparation de ladite émulsion.

Des émulsions de polymères eau-dans-huile de polymères solubles dans l'eau sont connues. Leurs procédés de préparation par la polymérisation en émulsion inverse sont également connus. On peut se reporter au document US 3,284,393, qui est le brevet de base dans ce domaine.

Le procédé tel que décrit dans le brevet US 3,284,393 consiste à émulsionner dans une phase organique, un ou plusieurs monomère(s) éthylénique(s) insaturé(s) soluble(s) dans l'eau, éventuellement en solution aqueuse, à l'aide d'un agent émulsifiant eau-dans-huile et ensuite à polymériser en émulsion en présence d'un initiateur. Le peroxyde de benzoyle, le peroxyde de lauroyle et le persulfate de potassium sont cités comme amorceur radicalaire. Ces peroxydes ont également été cités dans le brevet US 3,920,599.

Le brevet US 4,059,552 décrivant des polymères gonflables à l'eau et finement divisés, cite l'hydroperoxyde de tertiobutyle, le peroxyde de diméthane sulfonyle et les persulfates d'ammonium comme amorceur de polymérisation.

On constate toutefois que dans les procédés plus récents, l'azobisisobutyronitrile est le plus fréquemment utilisé (US 4,024,097, US 4,713,431, US 4,419,344) comme amorceur en polymérisation émulsion inverse.

Par ailleurs, le document US 5,292,800 divulgue des émulsions de polymères eau-dans-huile, dans lesquelles la phase organique est constituée d'au moins 50 % d'huiles végétales ou animales. L'exemple comparatif 1 de ce document montre qu'en polymérisant à 55°C, 250 g d'une solution aqueuse à 50 % d'acrylamide dans 250 g d'huile de colza en présence de 2,2'-azobis (isobutyrate) de diméthyle comme amorceur et à l'aide d'un monoléate de sorbitanne commercial comme agent émulsifiant, se forme une émulsion de polymère eau-dans-huile granuleuse et non filtrable.

La société déposante a maintenant mis au point un procédé de préparation d'émulsion inverse stable ayant une phase organique inférieure à 50 % en poids. En outre, il permet de réduire voire supprimer les problèmes de formation de coagulats ou de grains rencontrés lors de la polymérisation. Ce procédé permet également de préparer des polymères à masses moléculaires élevées, propriété particulièrement intéressante pour accroître leur efficacité dans des applications telles que floculation, etc.

Le procédé selon la présente invention, consistant à émulsionner, dans une phase organique, un ou plusieurs monomère(s) éthylénique(s) insaturé(s), à l'aide d'un agent émulsifiant eau-dans-huile puis à polymériser en émulsion, est caractérisé en ce que l'on polymérise en présence d'un ou de plusieurs amorceur(s) appartenant à la famille d'esters d'acides azocarboxyliques, représenté(e) par la formule (I), 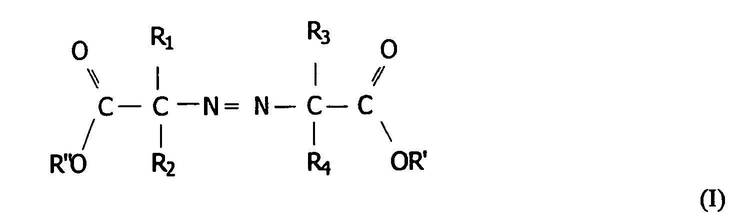 dans laquelle :
R₁, R₂, R₃ et R₄, identiques ou différents sont sélectionnés indépendamment dans le groupe consistant en -alkyles linéaires ou ramifiés ayant de 1 à 9 atomes de carbone, de préférence de 1 à 4 atomes de carbone, éventuellement substitués par un ou plusieurs substituants sélectionnés parmi les substituants hydroxyl, alkoxy en C₁ à C₆, halogène ; -cycloalkyles en C₃ à C₁₂, éventuellement substitués par un ou plusieurs substituants sélectionnés parmi les groupes alkyle en C₁ à C₆, alkoxy en C₁ à C₆, hydroxy et halogéné ;
   - aralkyles éventuellement substitués par un ou plusieurs groupes alkyle en C₁ à C₆, alkoxy en C₁ à C₆, hydroxy et halogéné ;
   - aryles éventuellement substitués par un ou plusieurs substituants sélectionnés parmi les groupes alkyle en C₁ à C₆, alkoxy en C₁ à C₆, hydroxy et halogéné ;
avec au moins une des combinaisons R₁-R₂ et R₃-R₄ pouvant éventuellement former un cycle aliphatique ; R" et R' sont identiques ou différents l'un de l'autre et sont sélectionnés indépendamment dans le groupe consistant en radicaux aliphatiques linéaires ou ramifiés en C₁ à C₁₀, de préférence en C₁ à C₄.

L'avantage de ces esters d'acides azocarboxyliques est leur basse température de fusion, généralement inférieure à 27°C. Les esters d'acides azocarboxyliques préférés sont ceux dans lesquels R" et R' représentent le méthyle ou l'éthyle et dans lesquels R₁, R₂, R₃ et R₄ représentent avantageusement des groupes alkyles de C₁ à C₄.

L'ester d'acide azocarboxylique particulièrement préféré est le diéthyl 2, 2'-azobisisobutyrate, c'est-à-dire avec R₁, R₂, R₃, R₄ représentant le méthyle et R' et R" représentant l'éthyle. Le DEAB peut également être utilisé en mélange avec d'autres esters d'acides azocarboxyliques. On peut citer par exemple les mélanges de diéthyl 2, 2'-azobisisobutyrate (DEAB) et de diméthyl 2,2'-azobisisobutyrate (DMAB) avec un taux massique en DEAB supérieur à 50 % et des mélanges de DEAB, DMAB et de méthyl 2, éthyl 2'-azobisisobutyrate avec un rapport molaire COOCH₃/COOC₂H₅ ≤ 10.

Les esters d'acides azocarboxyliques de formule (I) peuvent être préparés par un procédé classique en deux étapes comprenant une première étape de conversion de l'azonitrile, par réaction avec un alcool, en présence de HCl, selon la réaction de Pinner, conduisant au chlorhydrate d'azoiminoéther correspondant et une seconde étape d'hydrolyse en présence du chlorhydrate ainsi obtenu. Ils peuvent être également préparés par les procédés améliorés tels que décrits dans les documents DE 2 254 572, EP 80 275 et EP 230 586.

En outre, ces esters peuvent être préparés par réaction d'un azonitrile avec un alcool et de l'acide chlorhydrique dans un solvant aromatique, avec un rapport molaire HCl/azonitrile >2 lorsque l'alcool est le méthanol et > 3 lorsque l'alcool est l'éthanol ou un alcool supérieur.

La quantité d'esters d'acides azocarboxyliques mise en jeu dans le procédé suivant la présente invention représente environ 0,01 à 1 % en poids du ou des monomère(s) éthylénique(s) insaturé(s) utilisé(s) et de préférence 0,02 à 0,5 % en poids.

Les monomères éthyléniques insaturés solubles dans l'eau ou les mélanges hydrosolubles de monomères, comprenant des monomères éthyléniques insaturés solubles dans l'eau et des monomères éthyléniques insaturés insolubles dans l'eau, sont préférés.

Comme monomères éthyléniques insaturés solubles dans l'eau, on peut citer notamment les acides carboxyliques monoéthyléniques insaturés, comme l'acide acrylique, l'acide méthacrylique, l'acide maléique, l'acide itaconique, les sels des acides carboxyliques susmentionnés, par exemple les sels de sodium, de potassium ou d'ammonium, les esters de l'acide acrylique et de l'acide méthacrylique d'aminoalcools, comme, par exemple l'acrylate de diméthylaminoéthyle, sous forme protonée ou quaternisée, par exemple le chlorhydrate de l'acrylate de diméthylaminoéthyle, le sulfate hydrogéné ou hydrosulfate de l'acrylate de diméthylaminoéthyle, le méthylchlorure de l'acrylate de diméthylaminoéthyle, le méthylsulfate de l'acrylate de diméthylaminoéthyle, le chlorhydrate du méthacrylate de diméthylaminoéthyle, l'hydrosulfate ou sulfate hydrogéné du méthacrylate de diméthylaminoéthyle, le méthylchlorure du méthacrylate de diméthylaminoéthyle, le méthylsulfate du méthacrylate de diméthylaminoéthyle, l'acrylamide, le méthacrylamide, des (méth)acrylamides N-alkylés, le chlorure de méthacrylamidopropyl-triméthylammonium, le chlorure d'acrylamidopropyltriméthylammonium, le méthylsulfate de méthacrylamidopropyltriméthylammonium, le méthylsulfate d'acrylamidopropyltriméthylammonium, les acides acrylamido- et méthacrylamidoalkylsulfoniques et leurs sels, tels que l'acide 2-acrylamido-2-méthylpropanesulfonique, les acrylates d'hydroxyalkyle et les méthacrylates d'hydroxyalkyle, l'acide vinylsulfonique, l'acide vinylphosphonique, les N-vinylamides, comme par exemple le N-vinylformamide, le N-vinylacétamide, le N-vinyl-N-méthylacétamide et le N-vinyl-N-méthylformamide, le chlorure de diallyldiméthylammonium, le N-vinylpyrrolidone, le N-vinylimidazole, la N-vinylimidazoline, la 2-méthyl-1-vinylimidazoline, l'acide méthacrylique de 2-éthylsuifonique, l'acide styrènephosphonique et l'acide styrène-sulfonique. On peut également citer le N-méthylolacrylamide, le N-méthylolméthacrylamide, tout comme les N-méthylol(méth)acrylamides éthérifiés partiellement ou totalement avec des alcools en C₁ à C₄ monohydroxylés.

Ces monomères peuvent être cationiques ou anioniques et dans certains cas, les charges ioniques sont suffisamment faibles de sorte qu'on peut considérer les monomères comme non-ioniques.

Les monomères cationiques sont, par exemple, les amines allyliques ou diallyliques ou le méthacrylate de diméthylaminoéthyle ou des sels quaternaires tels que le chlorure d'acrylate éthyl triméthyl ammonium, le chlorure de méthacrylate éthyl triméthyl ammonium, le chlorure d'acrylamidopropyl triméthyl ammonium et le chlorure de diallyldiméthyl ammonium.

Les monomères anioniques sont, par exemple, l'acide acrylique ou méthacrylique, l'acide 2-(méth)acrylamido alkylsulfonique et leurs sels, l'acide vinyl phosphonique, l'acide styrène sulfonique et l'acide styrène phosphonique.

Le mélange hydrosoluble de monomères qui convient particulièrement à l'invention est constitué d'acrylamide et d'au moins un monomère choisi parmi le chlorure d'acrylate éthyl triméthyl ammonium, le chlorure de méthacrylate éthyl trimétyl ammonium, le chlorure d'acrylamidopropyl triméthylammonium, le chlorure de diallyldiméthyl ammonium, l'acide acrylique et l'acide méthacrylique.

La phase organique est constituée d'un liquide hydrophobe inerte, et représente en général entre 10 et 49 % du poids total de l'émulsion et de préférence entre 20 et 40 %.

Le liquide hydrophobe inerte peut être choisi dans une large gamme de liquides organiques comprenant les hydrocarbures liquides et les hydrocarbures liquides substitués, contenant de préférence de 4 à 8 atomes de carbone ou même plus de 8 atomes de carbone. On peut utiliser, par exemple, le benzène, le xylène, le toluène, les huiles minérales, le kérosène, les essences lourdes et dans certains cas le pétrole. Les coupes pétrolières et en particulier la coupe isoparaffinique à chaîne ramifiée vendue sous la marque de fabrique "Isopar M" se sont avérés particulièrement intéressantes.

Les agents émulsifiants eau-dans-huile appropriés sont ceux possédant un indice HLB (équilibre hydrophile lipophile) comprise entre 2 et 10, et de préférence entre 3 et 9. Pour la définition de l'indice HLB, on peut se reporter à l'article de W.C. Griffin dans Journal of Society of Cosmetic Chemist, volume 1, 311 (1950).

A titre d'exemple, on peut citer les esters d'acides gras de mono-, di- et polyglycérines, comme le monooléate, le dioléate, le monostéarate, le distéarate et le palmitate-stéarate. Ces esters peuvent être préparés, par exemple, en estérifiant des mono-, di et polyglycérines, ou des mélanges d'alcools polyhydroxylés tels que l'éthylène glycol, le diéthylèneglycol, le dipropylèneglycol, le butanediol-1,4, le butanetriol-1,2,4, la glycérine, le triméthylolpropane, le sorbitol, le néopentylglycol et le pentaérythritol.

En outre, on peut citer les esters d'acides gras du sorbitanne, comme le monooléate de sorbitanne, le dioléate de sorbitanne, le trioléate de sorbitanne, le monostéarate de sorbitanne et le tristéarate de sorbitanne.

Les esters d'acides gras de mannityle, comme le monolaurate de mannityle, ou le monopalmitate de mannityle, les esters d'acides gras de la pentaérythrityle, comme le monomyristate de pentaérythrityle, le monopalmitate de pentaérythrityle, le dipalmitate de pentaérythrityle, les esters d'acides gras du polyéthylèneglycolsorbitanne, plus particulièrement les monooléates, les esters d'acides gras de polyéthylèneglycolmannityle, plus particulièrement les monooléates et trioléates, les esters d'acides gras du glucose, comme le monooléate de glucose et le monostéarate de glucose, le distéarate de triméthylolpropane, les produits de la réaction de l'isopropylamide avec l'acide oléique, les esters d'acides gras de glycérinesorbitanne, les alkylamines éthoxylées, le phtalate d'hexadécylsodium et le phtalate de décylsodium peuvent également convenir comme agent émulsifiant.

La température de polymérisation dépend de la cinétique de décomposition de l'amorceur utilisé et est généralement comprise entre 10 et 100°C, de préférence comprise entre 30 et 90°C.

Selon le procédé de la présente invention, on opère de préférence en l'absence d'oxygène. On peut utiliser un flux de gaz inerte tel que l'azote ou l'argon pour purger l'installation. On a observé qu'en l'absence d'oxygène dans le milieu réactionnel, les polymères obtenus sont reproductibles, les masses molaires sont plus élevées et la teneur en monomère résiduelle est plus faible.

Le procédé de la présente invention a en outre l'avantage de ne pas conduire à la formation des sous-produits toxiques.

Les polymères ainsi obtenus peuvent être utilisés comme floculants dans l'épuration des eaux résiduaires urbaines et industrielles, dans l'industrie papetière, dans les mines, les carrières, les boues de forage, dans la récupération assistée du pétrole et dans le traitement d'eau potable.

### PARTIE EXPERIMENTALE

| | |
|---|---|
| Isopar M : | Hydrocarbure paraffinique d'Exxon |
| Span 80 : | Sorbitanne monooléate de ICI |
| Tween 61 : | Monostéarate de Sorbitanne polyethoxyléné (POE 4 moles) de ICI |
| AZDN : | 2,2'-Azobisisobutyronitrile commercialisé par Elf Atochem |
| DMAB : | Diméthyl2,2'azobisisobutyrate |
| DEAB : | Diéthyl 2,2'-azobisisobutyrate |
| EDTA : | Ethylène diaminetetraacétique acide. |

La quantité indiquée dans le mode opératoire général correspond à 100 grammes de monomères utilisés.

### Mode opératoire général

### Préparation de la phase aqueuse :

Les produits suivants sont successivement introduits dans un becher sous agitation :
- eau déminéralisée 176,35 g
- acrylamide (50 % dans l'eau) 335,91 g
- Adamquat MC 80 50,00 g
- EDTA 0,08 g
- Acide adipique 12,60 g
- NaOH (50 % dans l'eau) 1,68 g
- NaCl 12,60 g

### Préparation de la phase huile :

Les produits suivants sont successivement introduits dans un vase de Wolff de 1 litre :
- Isopar M 218,67 g
- Span 80 18,60 g
- Tween 61 2,20 g

### Préparation de l'émulsion de monomère :

La phase aqueuse précédemment préparée est versée dans la phase huile. Une homogénéisation des deux phases est réalisée à l'aide d'un ultra-turrax pendant 2 minutes.

### Réaction de polymérisation :

L'émulsion de monomère précédemment obtenue est versée dans un réacteur de polymérisation muni d'une agitation double turbine réglée à 500 tours/min, d'un réfrigérant et d'un tube plongeant alimenté en azote. Cette émulsion est alors maintenue 30 min sous balayage d'azote et est portée à 47°C. L'amorceur azoïque (0,15 part) est alors introduit tout en maintenant la température du milieu réactionnel à 47°C +/- 2°C pendant 2h30. On effectue alors un palier à 52,5°C pendant 1 h et un deuxième palier à 80°C également pendant 1h. Le milieu réactionnel est alors refroidi à température ambiante, dépoté en filtrant le mélange sur un filtre de 10 µm. La quantité de grains éventuellement formés est mesurée après séchage à l'étuve 24h à 40°C. Le taux de grains est calculé en faisant le rapport de la quantité de grain obtenu et de la quantité théorique de polymère formé.

Mesure de la viscosité intrinsèque des polymères isolés par précipitation de 10 g d'émulsion inverse dans 100 g d'acétone, le polymère étant ensuite repris dans 300 ml d'acétone pour conduire à une poudre qui est séchée 24h en étuve à 40°C.

0,5 g de copolymère est dissous dans 200 ml d'une solution aqueuse molaire de NaCl. Cette solution est rediluée plusieurs fois et les viscosités cinématiques correspondantes mesurées à chaque fois. La viscosité intrinsèque peut alors être déterminée.

| ***EXEMPLES*** | ***1*** | ***2*** | ***3*** |
|---|---|---|---|
| Amorceur | AZDN | DMAB | DEAB |
| Taux de grains | 3,7 % | 0 % | 0 % |
| Viscosité intrinsèque (dg/l) | 12,7 | 15 | 12,5 |

### EXEMPLE 4 :

La réaction est réalisée comme décrit précédemment en maintenant un palier de polymérisation à 45°C au lieu de 47°C et en utilisant comme amorceur le DMAB.

| ***EXEMPLE*** | ***5*** |
|---|---|
| Amorceur | DMAB |
| Taux de grains | 0 % |
| Viscosité intrinsèque (dg/l) | 17 |

## Revendications

1. Procédé de préparation d'une émulsion de polymères eau-dans-huile ayant une phase organique inférieure à 50% en poids, consistant à émulsionner dans une phase organique, un ou plusieurs monomère(s) éthylénique(s) insaturé(s), à l'aide d'un agent émulsifiant eau-dans-huile puis à polymériser en émulsion, est **caractérisé en ce que** l'on polymérise en présence d'un ou de plusieurs amorceur(s) appartenant à la famille d'esters d'acides azocarboxyliques, représenté(e) par la formule (I), 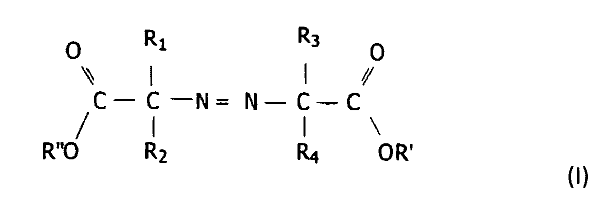 dans laquelle :
R₁, R₂, R₃ et R₄, identiques ou différents sont sélectionnés indépendamment dans le groupe consistant en
- alkyles linéaires ou ramifiés ayant de 1 à 9 atomes de carbone, de préférence de 1 à 4 atomes de carbone, éventuellement substitués par un ou plusieurs substituants sélectionnés parmi les substituants hydroxyl, alkoxy en C₁ à C₆, halogène;
- cycloalkyles en C₃ à C₁₂, éventuellement substitués par un ou plusieurs substituants sélectionnés parmi les groupes alkyle en C₁ à C₆, alkoxy en C₁ à C₆, hydroxy et halogéné;
- aralkyles éventuellement substitués par un ou plusieurs groupes alkyle en C₁ à C₆, alkoxy en C₁ à C₆, hydroxy et halogéné;
- aryles éventuellement substitués par un ou plusieurs substituants sélectionnés parmi les groupes alkyle en C₁ à C₆, alkoxy en C₁ à C₆, hydroxy et halogéné;
avec au moins une des combinaisons R₁-R₂ et R₃-R₄ pouvant éventuellement former un cycle aliphatique ; R" et R' sont identiques ou différents l'un de l'autre et sont sélectionnés indépendamment dans le groupe consistant en radicaux aliphatiques linéaires ou ramifiés en C₁ à C₁₀, de préférence en C₁ à C₄.

2. Procédé selon la revendication 1 **caractérisé en ce que** les esters d'acides azocarboxyliques sont ceux dans lesquels R" et R' représentent le méthyle ou l'éthyle et dans lesquels R₁, R₂, R₃ et R₄ représentent un radical alkyle C₁ à C₄.

3. Procédé selon la revendication 2 **caractérisé en ce que** R" et R' représentent le radical éthyle ét R₁, R₂, R₃ et R₄ représentent un radical méthyle.

4. Procédé selon la revendication 1 **caractérisé en ce que** l'amorceur est le diéthyl 2,2'-azobisisobutyrate.

5. Procédé selon la revendication 4 **caractérisé en ce que** le diéthyl 2,2'-azobisisobutyrate est utilisé en mélange avec d'autres esters d'acides carboxyliques de formule (I).

6. Procédé selon l'une quelconque des revendications 1 à 5 **caractérisé en ce que** l'on opère en l'absence d'oxygène.

7. Procédé selon l'une quelconque des revendications 1 à 6 **caractérisé en ce que** la température de polymérisation est comprise entre 10 et 100°C et de préférence entre 30 et 90°C.

8. Procédé selon l'une quelconque des revendications 1 à 7 **caractérisé en ce que** la phase organique est constituée d'un liquide hydrophobe inerte.

9. Procédé selon l'une quelconque des revendications 1 à 8 **caractérisé en ce que** le(s) monomère(s) éthylénique(s) insaturé(s) sont un mélange hydrosoluble de monomères comprenant des monomères éthyléniques insaturés solubles dans l'eau et des monomères éthyléniques insaturés insolubles dans l'eau.

10. Procédé selon la revendication 9, **caractérisé en ce que** le mélange hydrosoluble de monomères est constitué d'acrylamide et d'au moins un monomère choisi parmi le chlorure d'acrylate éthyl triméthyl ammonium, le chlorure de méthacrylate éthyl trimétyl ammonium, le chlorure d'acrylamidopropyl triméthylammonium, le chlorure de diattytdiméthyt ammonium, l'acide acrylique et l'acide méthacrylique.

11. Procédé selon l'une quelconque des revendications 1 à 10 **caractérisé en ce que** l'agent émulsifiant est choisi parmi les esters d'acides gras de mono-, di et polyglycérines, préparés en estérifiant des mono-, di et polyglycérines, ou des mélanges d'alcools polyhydroxylés.

12. Emulsion susceptible d'être obtenue selon l'une quelconque des revendications 1 à 11.

## Claims

1. Process for preparing a water-in-oil polymer emulsion having an organic phase of less than 50% by weight, which consists in emulsifying, in an organic phase, one or more ethylenically unsaturated monomer(s), using a water-in-oil emulsifier and then in performing an emulsion polymerization, is **characterized in that** the polymerization is performed in the presence of one or more initiator(s) belonging to the family of azocarboxylic acid esters, represented by formula (I): 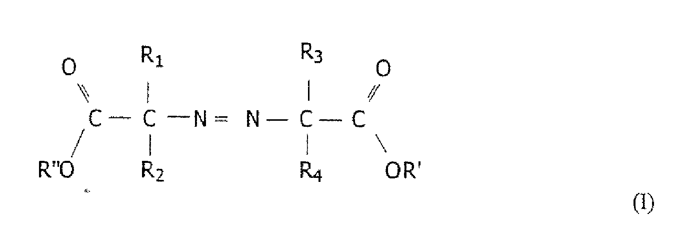 in which:
R₁, R₂, R₃ and R₄, which may be identical or different, are selected independently from the group consisting of
- linear or branched alkyls containing from 1 to 9 carbon atoms and preferably from 1 to 4 carbon atoms, optionally substituted with one or more substituents selected from hydroxyl, C₁ to C₆ alkoxy and halogen substituents;
- C₃ to C₁₂ cycloalkyls, optionally substituted with one or more substituents selected from C₁ to C₆ alkyl, C₁ to C₆ alkoxy, hydroxyl and halo groups;
- aralkyls optionally substituted with one or more C₁ to C₆ alkyl, C₁ to C₆ alkoxy, hydroxyl and halo groups;
- aryls optionally substituted with one or more substituents selected from C₁ to C₆ alkyl, C₁ to C₆ alkoxy, hydroxyl and halo groups;
with at least one of the combinations R₁-R₂ and R₃-R₄ possibly forming an aliphatic ring; R" and R' are identical to or different than each other and are selected independently from the group consisting of linear or branched C₁ to C₁₀ and preferably C₁ to C₄ aliphatic radicals.

2. Process according to Claim 1, **characterized in that** the azocarboxylic acid esters are those in which R" and R' represent methyl or ethyl and in which R₁, R₂, R₃ and R₄ represent a C₁ to C₄ alkyl radical.

3. Process according to Claim 2, **characterized in that** R" and R' represent an ethyl radical and R₁, R₂, R₃ and R₄ represent a methyl radical.

4. Process according to Claim 1, **characterized in that** the initiator is diethyl 2,2'-azobisisobutyrate.

5. Process according to Claim 4, **characterized in that** the diethyl 2,2'-azobisisobutyrate is used as a mixture with other carboxylic acid esters of formula (I).

6. Process according to any one of Claims 1 to 5, **characterized in that** it is performed in the absence of oxygen.

7. Process according to any one of Claims 1 to 6, **characterized in that** the polymerization temperature is between 10 and 100°C and preferably between 30 and 90°C.

8. Process according to any one of Claims 1 to 7, **characterized in that** the organic phase consists of an inert hydrophobic liquid.

9. Process according to any one of Claims 1 to 8, **characterized in that** the ethylenically unsaturated monomer(s) are a water-soluble mixture of monomers, comprising water-soluble ethylenically unsaturated monomers and water-insoluble ethylenically unsaturated monomers.

10. Process according to Claim 9, **characterized in that** the water-soluble mixture of monomers consists of acrylamide and of at least one monomer chosen from ethyltrimethylammonium acrylate chloride, ethyltrimethylammonium methacrylate chloride, acrylamidopropyltrimethylammonium chloride, diallyldimethylammonium chloride, acrylic acid and methacrylic acid.

11. Process according to any one of Claims 1 to 10, **characterized in that** the emulsifiers are chosen from fatty acid esters of mono-, di- and polyglycerols, prepared by esterifying mono-, di- and polyglycerols, or mixtures of polyhydroxylated alcohols.

12. Emulsion which may be obtained according to any one of Claims 1 to 11.

## Patentansprüche

1. Verfahren zur Herstellung einer Wasser-in-Öl-Polymeremulsion mit einer organischen Phase in einer Menge von weniger als 50 Gew.-%, bei dem man ein ethylenisch ungesättigtes Monomer oder mehrere ethylenisch ungesättigte Monomere mit Hilfe eines Wasser-in-Öl-Emulgators in einer organischen Phase emulgiert und dann eine Emulsionspolymerisation durchführt, **dadurch gekennzeichnet, daß** man die Polymerisation in Gegenwart eines oder mehrerer Initiatoren aus der Familie der Azocarbonsäureester der Formel (I), 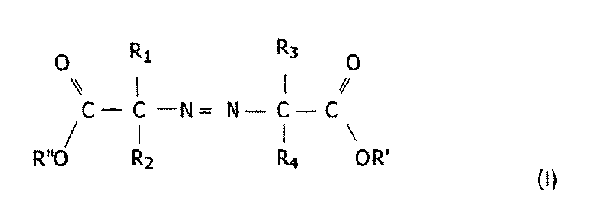 worin:
R₁, R₂, R₃ und R₄ gleich oder verschieden sind und unabhängig voneinander aus der Gruppe bestehend aus
- linearen oder verzweigten Alkylgruppen mit 1 bis 9 Kohlenstoffatomen, vorzugsweise 1 bis 4 Kohlenstoffatomen, die gegebenenfalls durch einen oder mehrere unter Hydroxyl-, C₁-bis C₆-Alkoxy- und Halogensubstituenten ausgewählte Substituenten substituiert sind;
- C₃- bis C₁₂-Cycloalkylgruppen, die gegebenenfalls durch einen oder mehrere unter C₁- bis C₆-Alkyl-, C₁- bis C₆-Alkoxy-, Hydroxy- und Halogengruppen ausgewählte Substituenten substituiert sind;
- Aralkylgruppen, die gegebenenfalls durch einen oder mehrere unter C₁- bis C₆-Alkyl-, C₁- bis C₆-Alkoxy-, Hydroxy- und Halogengruppen ausgewählte Substituenten substituiert sind;
- Arylgruppen, die gegebenenfalls durch einen oder mehrere unter C₁- bis C₆-Alkyl-, C₁- bis C₆-Alkoxy-, Hydroxy- und Halogengruppen ausgewählte Substituenten substituiert sind;
ausgewählt sind;
wobei mindestens eine der Kombinationen R₁-R₂ und R₃-R₄ gegebenenfalls einen aliphatischen Ring bilden kann; R" und R' gleich oder voneinander verschieden sind und unabhängig voneinander aus der Gruppe bestehend aus linearen oder verzweigten aliphatischen C₁- bis C₁₀-Resten, vorzugsweise C₁-bis C₄-Resten, ausgewählt sind;
durchführt.

2. Verfahren nach Anspruch 1, **dadurch gekennzeichnet, daß** es sich bei den Azocarbonsäureestern um diejenigen handelt, in denen R" und R' für Methyl oder Ethyl stehen und R₁, R₂, R₃ und R₄ für einen C₁- bis C₄-Alkylrest stehen.

3. Verfahren nach Anspruch 2, **dadurch gekennzeichnet, daß** R" und R' für einen Ethylrest stehen und R₁, R₂, R₃ und R₄ für einen Methylrest stehen.

4. Verfahren nach Anspruch 1, **dadurch gekennzeichnet, daß** es sich bei dem Initiator um Diethyl-2,2'-azobisisobutyrat handelt.

5. Verfahren nach Anspruch 4, **dadurch gekennzeichnet, daß** man das Diethyl-2,2'-azobisisobutyrat im Gemisch mit anderen Carbonsäureestern der Formel (I) verwendet.

6. Verfahren nach einem der Ansprüche 1 bis 5, **dadurch gekennzeichnet, daß** man unter Ausschluß von Sauerstoff arbeitet.

7. Verfahren nach einem der Ansprüche 1 bis 6, **dadurch gekennzeichnet, daß** die Polymerisationstemperatur zwischen 10 und 100°C und vorzugsweise zwischen 30 und 90°C liegt.

8. Verfahren nach einem der Ansprüche 1 bis 7, **dadurch gekennzeichnet, daß** die organische Phase aus einer inerten hydrophoben Flüssigkeit besteht.

9. Verfahren nach einem der Ansprüche 1 bis 8, **dadurch gekennzeichnet, daß** es sich bei dem ethylenisch ungesättigten Monomer bzw. den ethylenisch ungesättigten Monomeren um eine wasserlösliche Monomerenmischung handelt, die wasserlösliche ethylenisch ungesättigte Monomere und wasserunlösliche ethylenisch ungesättigte Monomere umfaßt.

10. Verfahren nach Anspruch 9, **dadurch gekennzeichnet, daß** die wasserlösliche Monomerenmischung aus Acrylamid und mindestens einem unter Ethyltrimethylammoniumacrylatchlorid, Ethyltrimethylammoniummethacrylatchlorid, Acrylamidopropyltrimethylammoniumchlorid, Diallyldimethylammoniumchlorid, Acrylsäure und Methacrylsäure ausgewählten Monomer besteht.

11. Verfahren nach einem der Ansprüche 1 bis 10, **dadurch gekennzeichnet, daß** man den Emulgator aus der Gruppe bestehend aus Fettsäureestern von Mono-, Di- und Polyglycerinen, hergestellt durch Veresterung von Mono-, Di- und Polyglycerinen, oder Mischungen von polyhydroxylierten Alkoholen, auswählt.

12. Emulsion, die nach einem der Ansprüche 1 bis 11 erhältlich ist.
